# EUROPEAN PATENT APPLICATION

(11) **EP 4 834 572 A1**
(43) Date of publication of application: **04.11.2026**
(21) Application number: 24905160.8
(22) Date of filing: 02.09.2024
(51) Int. Cl.: B29C 70/44, B29C 70/42, B29C 70/34

(54) **IN-SITU HEATING AND PRESSURIZING DEVICE AND METHOD FOR FORMING HELICOPTER BLADE**

(30) Priority: 29.12.2023 CN 202311861699
(71) Applicant: AVIC Harbin Aircraft Industry Group Co., Ltd, Harbin, Heilongjiang 150060 (CN)
(72) Inventor: SHI, Zhendong, Harbin, Heilongjiang 150060 (CN); YUN, Qingwen, Harbin, Heilongjiang 150060 (CN); HAO, Gangning, Harbin, Heilongjiang 150060 (CN); WANG, Zhenlin, Harbin, Heilongjiang 150060 (CN); LIU, Qidi, Harbin, Heilongjiang 150060 (CN); ZHAO, Xueying, Harbin, Heilongjiang 150060 (CN); LI, Jiachen, Harbin, Heilongjiang 150060 (CN)
(74) Representative: Osha BWB
(86) International application number: PCT/CN2024/116336
(87) International publication number: WO 2025/138998

(57) **Abstract**

The present disclosure relates to the technical field of graphene film electric heating, in particular to a helicopter blade forming device and method with in-situ heating and pressurization. It is used for forming a hollow spar blade. The device includes an in-situ electric heating film, a silicone rubber pressurized bladder, an upper forming mold, and a lower forming mold. The in-situ electric heating film is disposed on a surface of the silicone rubber pressurized bladder to form an in-situ heating and pressurizing assembly. The hollow spar blade to be formed or repaired is placed between the upper forming mold and the lower forming mold. The in-situ heating and pressurizing assembly is disposed on an outer surface or an inner surface of the hollow spar blade to be formed or repaired. The present disclosure enables localized heating and pressurization of specific areas of a helicopter blade component as needed, without requiring the entire blade to be placed in a heating device. This reduces energy consumption and prevents structural damage and performance degradation in non-targeted areas caused by heating. It offers high flexibility and is well-suited for applications such as localized repair and forming of blades.

## Description

### TECHNICAL FIELD

The present disclosure relates to the technical field of graphene film electric heating, in particular to a helicopter blade forming device and method with in-situ heating and pressurization.

### BACKGROUND

Helicopter blades are among the most critical components of the rotor system of a helicopter, with the spar serving as the foundation in blade manufacturing. The helicopter blades are connected directly to a hub of the rotor system via mechanical structures on the spar, which bears centrifugal loads of the blades and has a certain torsional, flapping, and lead-lag stiffness. Spars typically adopt a metal structure or a composite structure. A metal structure is isotropic and involves complex forming processes, whereas a composite structure can be specifically designed and optimized in terms of fiber orientation and thickness to meet the mechanical properties requirements of specific directions. Moreover, composite spars offer superior corrosion resistance and fatigue performance compared to metal spars at the same weight. Currently, helicopter blades are generally manufactured using a co-curing process entirely with composite materials. In this process, a glass prepreg spar, a foam core, and a carbon fiber fabric prepreg are laid up into a cavity of a lower mold of a tooling to be aligned and positioned accordingly. The blade is then compacted as a whole by an upper mold of the tooling, followed by curing under heat and pressure with hot-pressing equipment.

Another method for manufacturing blades is a co-bonding forming process. First, the main load-bearing composite components, such as a hollow spar of the blade, are precured and formed. These cured components are then positioned inside a forming mold according to the design layout, with adhesive bonding materials, such as adhesive films, placed between the components. The adhesive is subsequently cured in a heating device to bond all components together, thereby completing the adhesive bonding and curing process of the blade.

In summary, regardless of the forming method of the helicopter composite blade, the forming mold needs to be placed in large heating equipment such as an autoclave for forming. Autoclaves, as the primary production equipment for composite components, are large pressure vessels equipped with integrated heating systems. A typical autoclave forming system includes a vessel body, a cooling system, a vacuum system, a pressure system, a heating system, a sealing system, and a control system. The working principle of an autoclave forming process involves heating and pressurizing the composite preform using the pressure generated by the high-temperature compressed gas in the vessel to complete the curing and forming process. Autoclave forming technology can produce composite components of various shapes. Due to this advantage, autoclaves are widely used in the production of aerospace components. However, the autoclave process is associated with high manufacturing costs due to strict requirements on size, temperature, and pressure. In addition, its auxiliary equipment, such as air or ammonia pipes, cooling pipes, heating furnaces, and monitoring equipment, further adds to the cost. The total cost of a large industrial autoclave and its auxiliary equipment is about 1 million CNY. The high manufacturing cost caused by the autoclave forming process has raised widespread concerns about issues such as high energy consumption, large gas consumption, large footprint, long curing cycle, etc. Other disadvantages caused by the large size of the autoclave and the heating and pressurizing method are slow temperature and pressure response and poor temperature control accuracy. Furthermore, as the overall composite components used in modern large aircraft become increasingly complex in contour and larger in size, conventional autoclave forming technology has been unable to meet the needs of practical manufacturing applications. Therefore, there is an urgent need to develop a new non-autoclave forming process that can provide uniform heating and pressurization while being energy-efficient, environmentally friendly, safe, reliable, and easy to operate.

Graphene is a novel material composed of only a single atomic layer of carbon (with a thickness of 0.335 nm), making it the thinnest two-dimensional material in the world. At the same time, it possesses exceptional and stable mechanical properties, extremely high electrical and thermal conductivity, and a very large specific surface area. The single-layer graphene has an electron mobility of 200,000 cm²V⁻¹s⁻¹, a Young's modulus and tensile strength of up to 1 TPa and 130 GPa, respectively, and a specific surface area of up to 2,600 m²g⁻¹. Pure and defect-free single-layer graphene has a thermal conductivity of up to 5,300 W/m·K, making it the carbon material with the highest thermal conductivity, while having a density of only 2.2 g·cm⁻³. It holds a significant promise in materials science, micro/nano processing, aerospace, and other fields, and is considered to be a revolutionary material for the future.

Silicone rubber is a commonly used polymer material with stable chemical properties and high mechanical strength. As an auxiliary material for composite forming, silicone rubber offers good processability. Furthermore, it has the advantages of strong plasticity, good heat resistance and reusability. The use of silicone rubber in the pressurization process is stable and easy to handle, thereby contributing to improved quality of components. Extensive research has been conducted both domestically and internationally on the design and pressure control of silicone rubber pressurization processes. Silicone rubber is widely used as an important auxiliary pressurizing material in conventional autoclaves and compression molding processes.

### SUMMARY

**Objectives of the present disclosure**: the present disclosure provides a helicopter blade forming device and method with in-situ heating and pressurization. Based on the characteristics of good electrical and thermal conductivity of graphene, a graphene heating film is used as the fundamental electric heating element. This graphene heating film is closely attached to the components to be heated. A silicone rubber bladder is then closely attached to the graphene film to provide pressure. The aim is to develop a low-cost, in-situ heating and pressurizing non-autoclave forming process for blades with a simple process.

**Technical solution of the present disclosure**: in order to achieve the above objectives, according to a first aspect of the present disclosure, a helicopter blade forming device with in-situ heating and pressurization is provided for forming a hollow spar blade. The device includes an in-situ electric heating film, a silicone rubber pressurized bladder, an upper forming mold, and a lower forming mold.

The in-situ electric heating film is disposed on a surface of the silicone rubber pressurized bladder to form an in-situ heating and pressurizing assembly. The hollow spar blade to be formed or repaired is placed between the upper forming mold and the lower forming mold. The in-situ heating and pressurizing assembly is disposed on an outer surface or an inner surface of the hollow spar blade to be formed or repaired.

In a possible embodiment, the in-situ electric heating film and the silicone rubber pressurized bladder are physically attached to each other.

In a possible embodiment, the in-situ electric heating film is embedded in an inner surface of the silicone rubber pressurized bladder to form the in-situ heating and pressurizing assembly for integrated heating and pressurization with the silicone rubber pressurized bladder.

In a possible embodiment, the in-situ electric heating film is a graphene electric heating film.

In a possible embodiment, an external insulating material of the graphene electric heating film is a high-temperature-resistant insulating material such as polyethylene terephthalate (PET) plastic, nylon, thermoplastic polyurethane (TPU), polyimide, or silicone rubber.

In a possible embodiment, the graphene electric heating film has a temperature uniformity of ± 5 °C.

According to a second aspect of the present disclosure, a helicopter blade forming method with in-situ heating and pressurization is provided. The method is implemented with the above-mentioned helicopter blade forming device with in-situ heating and pressurization and includes the following steps:

Step One, sanding and cleaning a leading edge of a hollow spar blade that has been cured and formed, evenly applying an adhesive film or a liquid adhesive to the leading edge of the blade, and then installing a wear strip on the leading edge of the blade;
Step Two, closely attaching the in-situ heating and pressurizing assembly to an outer surface of the wear strip between the upper and lower forming molds; and
Step Three, inflating the silicone rubber bladder to a pressure of 0.1 MPa, and energizing the in-situ electric heating film of the in-situ heating and pressurizing assembly for heating; upon completion of heating, de-energizing the in-situ electric heating film, and after a decrease in temperature, releasing gas from the silicone rubber bladder, opening the upper forming mold and the lower forming mold, and removing the formed blade with the wear strip adhesively bonded.

According to a third aspect of the present disclosure, a helicopter blade forming method with in-situ heating and pressurization is provided. The method is implemented with the above-mentioned helicopter blade forming device with in-situ heating and pressurization and includes the following steps:
Step One, placing a hollow spar blade to be formed between the upper forming mold and the lower forming mold;
Step Two, closely attaching the in-situ heating and pressurizing assembly to an inner surface of the hollow spar blade, with the silicone rubber pressurized bladder and the in-situ electric heating film being disposed sequentially from inside to outside; and
Step Three, inflating the silicone rubber bladder to a pressure of 20 MPa, and energizing the in-situ electric heating film of the in-situ heating and pressurizing assembly for heating; upon completion of heating, de-energizing the graphene electric heating film, and after a decrease in temperature, releasing gas from the silicone rubber bladder, and removing the formed hollow spar blade.

According to a fourth aspect of the present disclosure, a helicopter blade repairing method with in-situ heating and pressurization is provided. The method is implemented with the above-mentioned helicopter blade forming device with in-situ heating and pressurization and includes the following steps:
Step One, cleaning a damaged area of a hollow spar blade to be repaired, then applying a composite layup, and applying a release film;
Step Two, closely attaching the in-situ heating and pressurizing assembly to an outer surface of the damaged area of a leading edge of the blade between the upper forming mold and the lower forming mold; and
Step Three, inflating the silicone rubber bladder to a pressure of 5 MPa, and energizing the graphene electric heating film; upon completion of heating, de-energizing the graphene electric heating film, and after a decrease in temperature, releasing gas from the silicone rubber bladder, and removing the repaired and formed blade.

**Compared with the prior art, the present disclosure has the following beneficial effects:**
(1) The present disclosure provides a helicopter blade forming process with graphene film heating and pressurization. Compared with conventional autoclave forming technology, the present disclosure provides a novel blade forming solution.
(2) The graphene electric heating film process provided in the present disclosure involves "surface heating," allowing the helicopter blade components to be heated uniformly to reduce defects.
(3) The heating process provided in the present disclosure directly heats the helicopter blade components, without the need to heat the equipment itself or its internal air medium, resulting in high energy efficiency;
(4) The present disclosure enables localized heating and pressurization of specific areas of a helicopter blade component as needed, without requiring the entire blade to be placed in a heating device. This reduces energy consumption and prevents structural damage and performance degradation in non-targeted areas caused by heating. It offers high flexibility and is well-suited for applications such as localized repairing and forming of blades.
(5) For the forming of the hollow spar of the helicopter blade, the present disclosure enables outward heating and pressurization from within the cavity, which facilitates air evacuation during the composite forming process and helps reduce defects in the formed hollow spar of the blade.

### BRIEF DESCRIPTION OF DRAWINGS

FIG. 1 is a schematic diagram of a hollow spar blade.
   In the figure: 1 main blade
   1-1 blade skin
   1-2 wear strip of blade
   1-3 hollow spar
FIG. 2 is a schematic diagram of a cross section of an in-situ heating and pressurizing device for a blade.
   In the figure: 2 graphene film in-situ heating and pressurization for adhesively bonding and forming a wear strip for the blade
   2-1 graphene electric heating film
   2-2 silicone rubber pressurized bladder
   2-3 tooling
FIG. 3 is a schematic diagram of a hollow spar of a blade.
   In the figure: 3-1 a cross section of the hollow spar of the blade
FIG. 4 is a schematic diagram showing the forming of a hollow spar of a blade
   In the figure: 4 graphene film in-situ heating and pressurization for forming the hollow spar of the blade
   4-1 silicone rubber bladder
   4-2 graphene electric heating film
   4-3 fixing tooling
FIG. 5 is a schematic diagram of a damaged blade to be repaired
   In the figure: 5-1 a damaged area of the blade
FIG. 6 is a schematic diagram of the repairing, curing, and forming of a blade
   In the figure: 6-1 composite layup; 6-2 graphene electric heating film; 6-3 silicone rubber bladder; 6-4 tooling

### DETAILED DESCRIPTION

To further understand the present disclosure, preferred embodiments of the present disclosure are described below in conjunction with specific examples. However, it should be understood that these descriptions are intended solely to further illustrate the features and advantages of the invention and should not be construed as limitations on the scope of the claims of the present disclosure.

According to the first aspect of the present disclosure, a helicopter blade forming device with in-situ heating and pressurization is provided for forming a hollow spar blade. The device includes an in-situ electric heating film, a silicone rubber pressurized bladder, an upper forming mold, and a lower forming mold.

The in-situ electric heating film is disposed on a surface of the silicone rubber pressurized bladder to form an in-situ heating and pressurizing assembly. The hollow spar blade to be formed or repaired is placed between the upper forming mold and the lower forming mold. The in-situ heating and pressurizing assembly is disposed on an outer surface or an inner surface of the hollow spar blade to be formed or repaired.

In a possible embodiment, the in-situ electric heating film and the silicone rubber pressurized bladder are physically attached to each other.

In a possible embodiment, the in-situ electric heating film is embedded in an inner surface of the silicone rubber pressurized bladder to form the in-situ heating and pressurizing assembly for integrated heating and pressurization with the silicone rubber pressurized bladder.

In a possible embodiment, the in-situ electric heating film is a graphene electric heating film.

In a possible embodiment, an external insulating material of the graphene electric heating film is a high-temperature-resistant insulating material such as polyethylene terephthalate (PET) plastic, nylon, thermoplastic polyurethane (TPU), polyimide, or silicone rubber.

In a possible embodiment, the graphene electric heating film has a temperature uniformity of ± 5 °C.

According to the second aspect of the present disclosure, a helicopter blade forming method with in-situ heating and pressurization is provided. The method is implemented with the above-mentioned helicopter blade forming device with in-situ heating and pressurization and includes the following steps:
Step One, sanding and cleaning a leading edge of a hollow spar blade that has been cured and formed, evenly applying an adhesive film or a liquid adhesive to the leading edge of the blade, and then installing a wear strip on the leading edge of the blade;
Step Two, closely attaching the in-situ heating and pressurizing assembly to an outer surface of the wear strip between the upper and lower forming molds; and
Step Three, inflating the silicone rubber bladder to a pressure of 0.1 MPa, and energizing the in-situ electric heating film of the in-situ heating and pressurizing assembly for heating; upon completion of heating, de-energizing the in-situ electric heating film, and after a decrease in temperature, releasing gas from the silicone rubber bladder, opening the upper forming mold and the lower forming mold, and removing the formed blade with the wear strip adhesively bonded.

### Embodiment 1

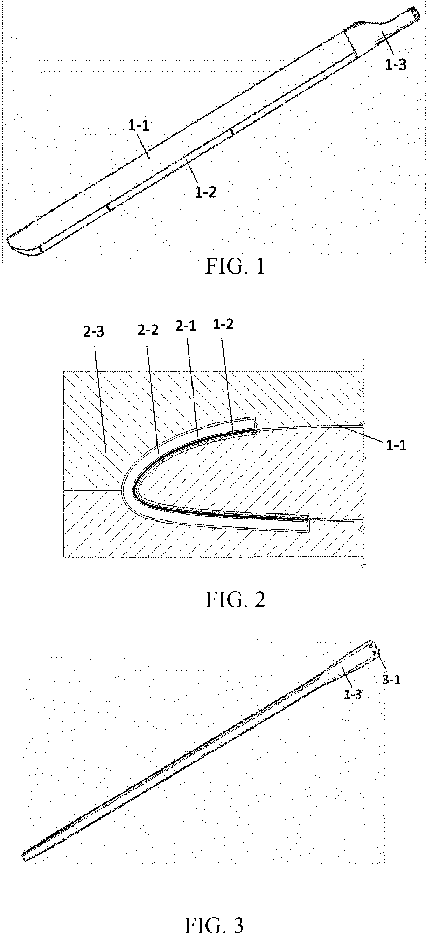

Adhesive bonding and forming of a wear strip of a blade:
(1) As shown in FIG. 1, a wear strip of a blade is located on the leading edge of the blade. The leading edge of the blade that has been cured and formed is sanded and cleaned. An adhesive film or a liquid adhesive is evenly applied to the leading edge of the blade. Then the wear strip of the blade is installed on the leading edge of the blade.
(2) As shown in FIG. 2, the graphene electric heating film is closely attached to the wear strip on the leading edge of the blade. The silicone rubber pressurized bladder is then closely attached to the graphene electric heating film, with the outermost layer being a fixing tooling.
(3) The silicone rubber bladder is inflated to a pressure of 0.1 MPa. The graphene electric heating film is energized for heating, with a heating rate of 5 °C/min to reach 70 °C. This temperature is maintained for 2 hours. Then the graphene electric heating film is de-energized. Once the temperature drops below 40 °C, gas is released from the silicone rubber bladder, and the blade that has been adhesively bonded and formed with the wear strip is removed.

According to the third aspect of the present disclosure, a helicopter blade forming method with in-situ heating and pressurization is provided. The method is implemented with the above-mentioned helicopter blade forming device with in-situ heating and pressurization and includes the following steps:
Step One, placing a hollow spar blade to be formed between the upper forming mold and the lower forming mold;
Step Two, closely attaching the in-situ heating and pressurizing assembly to an inner surface of the hollow spar blade, with the silicone rubber pressurized bladder and the in-situ electric heating film being disposed sequentially from inside to outside; and
Step Three, inflating the silicone rubber bladder to a pressure of 20 MPa, and energizing the in-situ electric heating film of the in-situ heating and pressurizing assembly for heating; upon completion of heating, de-energizing the graphene electric heating film, and after a decrease in temperature, releasing gas from the silicone rubber bladder, and removing the formed hollow spar blade.

### Embodiment 2

### Curing and forming of a hollow spar of a blade:

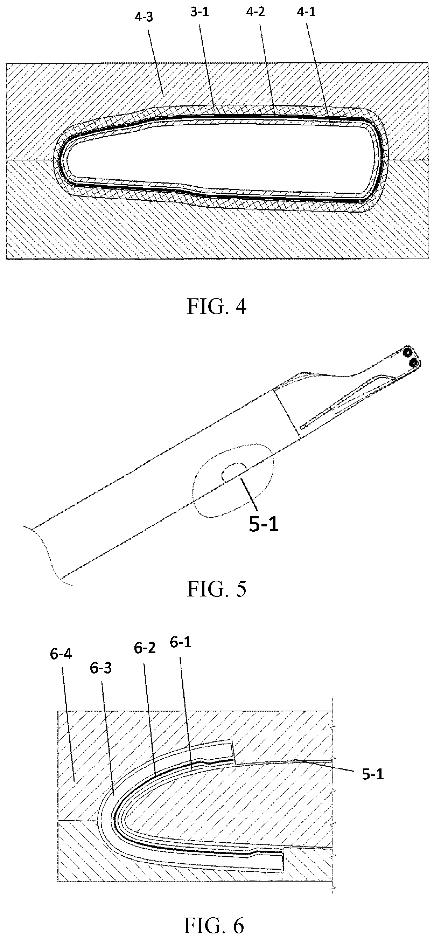

(1) FIG. 3 is a schematic diagram of a hollow spar of a blade. For the composite forming of a hollow spar, as shown in FIG. 4, a pressurized silicone rubber bladder, a graphene film, and a composite material are provided sequentially from within the hollow toward the outside, with the outermost layer being a fixing tooling.
(2) The silicone rubber bladder is inflated to a pressure of 20 MPa. The graphene electric heating film is energized for heating, with a heating rate of 5 °C/min to reach 130 °C. This temperature is maintained for 4 hours. Then the graphene electric heating film is de-energized. Once the temperature drops below 40 °C, gas is released from the silicone rubber bladder, and the formed hollow spar is removed.

According to the fourth aspect of the present disclosure, a helicopter blade repairing method with in-situ heating and pressurization is provided. The method is implemented with the above-mentioned helicopter blade forming device with in-situ heating and pressurization and includes the following steps:
Step One, cleaning a damaged area of a hollow spar blade to be repaired, then applying a composite layup, and applying a release film;
Step Two, closely attaching the in-situ heating and pressurizing assembly to an outer surface of the damaged area of a leading edge of the blade between the upper forming mold and the lower forming mold; and
Step Three, inflating the silicone rubber bladder to a pressure of 5 MPa, and energizing the graphene electric heating film; upon completion of heating, de-energizing the graphene electric heating film, and after a decrease in temperature, releasing gas from the silicone rubber bladder, and removing the repaired and formed blade.

### Embodiment 3

### Repairing and forming for blade damage:

(1) As shown in FIG. 5, if partial damage occurs to a blade during use or transportation, the damaged area may be cleaned, followed by the application of a composite layup and the application of a release film.
(2) As shown in FIG. 6, the graphene electric heating film is closely attached to the damaged area of the leading edge of the blade, the silicone rubber pressurized bladder is then closely attached to the graphene electric heating film, with the outermost layer being a fixing tooling.
(3) A silicone rubber bladder is inflated to a pressure of 5 MPa. The graphene electric heating film is energized for heating, with a heating rate of 5 °C/min to reach 130 °C. This temperature is maintained for 5 hours. Then the graphene electric heating film is de-energized. Once the temperature drops below 40 °C, gas is released from the silicone rubber bladder, and the repaired and formed blade is removed.

## Claims

1. A helicopter blade forming device with in-situ heating and pressurization for forming a hollow spar blade, comprising:
an in-situ electric heating film;
a silicone rubber pressurized bladder;
an upper forming mold; and
a lower forming mold,
wherein the in-situ electric heating film is disposed on a surface of the silicone rubber pressurized bladder to form an in-situ heating and pressurizing assembly,
wherein the hollow spar blade to be formed or repaired is placed between the upper forming mold and the lower forming mold, and
wherein the in-situ heating and pressurizing assembly is disposed on an outer surface or an inner surface of the hollow spar blade to be formed or repaired.

2. The helicopter blade forming device with in-situ heating and pressurization according to claim 1, wherein the in-situ electric heating film and the silicone rubber pressurized bladder are physically attached to each other.

3. The helicopter blade forming device with in-situ heating and pressurization according to claim 1, wherein the in-situ electric heating film is embedded in an inner surface of the silicone rubber pressurized bladder to form the in-situ heating and pressurizing assembly for integrated heating and pressurization with the silicone rubber pressurized bladder.

4. The helicopter blade forming device with in-situ heating and pressurization according to claim 1, wherein the in-situ electric heating film is a graphene electric heating film.

5. The helicopter blade forming device with in-situ heating and pressurization according to claim 4, wherein an external insulating material of the graphene electric heating film is a high-temperature-resistant insulating material.

6. The helicopter blade forming device with in-situ heating and pressurization according to claim 5, wherein the high-temperature-resistant insulating material is selected from polyethylene terephthalate plastic, nylon, thermoplastic polyurethane, polyimide, or silicone rubber.

7. The helicopter blade forming device with in-situ heating and pressurization according to claim 4 or 5, wherein the graphene electric heating film has a temperature uniformity of ± 5 °C.

8. A helicopter blade forming method with in-situ heating and pressurization implemented with the helicopter blade forming device with in-situ heating and pressurization according to any one of claims 1 to 7, the method comprising the following steps:
Step One, sanding and cleaning a leading edge of a hollow spar blade that has been cured and formed, evenly applying an adhesive film or a liquid adhesive to the leading edge of the blade, and then installing a wear strip on the leading edge of the blade;
Step Two, closely attaching the in-situ heating and pressurizing assembly to an outer surface of the wear strip between the upper and lower forming molds; and
Step Three, inflating the silicone rubber bladder to a pressure of 0.1 MPa, and energizing the in-situ electric heating film of the in-situ heating and pressurizing assembly for heating; upon completion of heating, de-energizing the in-situ electric heating film, and after a decrease in temperature, releasing gas from the silicone rubber bladder, opening the upper forming mold and the lower forming mold, and removing the formed blade with the wear strip adhesively bonded.

9. A helicopter blade forming method with in-situ heating and pressurization implemented with the helicopter blade forming device with in-situ heating and pressurization according to any one of claims 1 to 7, the method comprising the following steps:
Step One, placing a hollow spar blade to be formed between the upper forming mold and the lower forming mold;
Step Two, closely attaching the in-situ heating and pressurizing assembly to an inner surface of the hollow spar blade, with the silicone rubber pressurized bladder and the in-situ electric heating film being disposed sequentially from inside to outside; and
Step Three, inflating the silicone rubber bladder to a pressure of 20 MPa, and energizing the in-situ electric heating film of the in-situ heating and pressurizing assembly for heating; upon completion of heating, de-energizing the graphene electric heating film, and after a decrease in temperature, releasing gas from the silicone rubber bladder, and removing the formed hollow spar blade.

10. A helicopter blade repairing method with in-situ heating and pressurization implemented with the helicopter blade forming device with in-situ heating and pressurization according to any one of claims 1 to 7, the method comprising the following steps:
Step One, cleaning a damaged area of a hollow spar blade to be repaired, then applying a composite layup, and applying a release film;
Step Two, closely attaching the in-situ heating and pressurizing assembly to an outer surface of the damaged area of a leading edge of the blade between the upper forming mold and the lower forming mold; and
Step Three, inflating the silicone rubber bladder to a pressure of 5 MPa, and energizing the graphene electric heating film; upon completion of heating, de-energizing the graphene electric heating film, and after a decrease in temperature, releasing gas from the silicone rubber bladder, and removing the repaired and formed blade.
